(19) Europäisches Patentamt
European Patent Office
Office européen des brevets

(11) **EP 2 436 124 B1**

(12) **EUROPEAN PATENT SPECIFICATION**

(45) Date of publication and mention
of the grant of the patent:
**07.03.2018 Bulletin 2018/10**

(21) Application number: **10723877.6**

(22) Date of filing: **28.05.2010**

(51) Int Cl.:
**H04B 7/08** (2006.01)       **H04W 36/00** (2009.01)
**H04B 7/04** (2017.01)

(86) International application number:
**PCT/US2010/036597**

(87) International publication number:
**WO 2010/138829 (02.12.2010 Gazette 2010/48)**

(54) **METHOD AND APPARATUS FOR PERFORMING SEARCHES WITH MULTIPLE RECEIVE DIVERSITY (RXD) SEARCH MODES**

VERFAHREN UND VORRICHTUNG ZUR SUCHE MIT MEHREREN EMPFANGSDIVERSITÄTSSUCHMODI

PROCÉDÉ ET APPAREIL POUR RÉALISER DES RECHERCHES AVEC DES MODES DE RECHERCHE DE DIVERSITÉ DE RÉCEPTION (RXD) MULTIPLES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 US 182544 P**
**27.05.2010 US 789263**

(43) Date of publication of application:
**04.04.2012 Bulletin 2012/14**

(73) Proprietor: **Qualcomm Incorporated**
**San Diego, CA 92121 (US)**

(72) Inventors:
• **HU, An-Swol, C.**
**San Diego, CA 92121 (US)**
• **JOOTAR, Jittra**
**San Diego, CA 92121 (US)**

(74) Representative: **Schmidbauer, Andreas Konrad**
**Wagner & Geyer Partnerschaft**
**Patent- und Rechtsanwälte**
**Gewürzmühlstrasse 5**
**80538 München (DE)**

(56) References cited:
**EP-A1- 1 069 713          WO-A1-2009/031757**

**US-A1- 2003 039 228     US-A1- 2003 108 135**

• **JEAN-FRANOIS FRIGON ET AL: "Design and Implementation of a Baseband WCDMA Dual-Antenna Mobile Terminal", IEEE TRANSACTIONS ON CIRCUITS AND SYSTEMS PART I: REGULAR PAPERS, IEEE SERVICE CENTER, NEW YORK, NY, US, vol. 54, no. 3, 1 March 2007 (2007-03-01), pages 518-529, XP011174774, ISSN: 1057-7122, DOI: DOI:10.1109/TCSI.2006.887620**
• **"3rd Generation Partnership Project; Technical Specification Group Radio Access Network; Spreading and modulation (FDD) (Release 8)", 3GPP STANDARD; 3GPP TS 25.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 March 2009 (2009-03-01), pages 1-36, XP050366823,**
• **"3rd Generation Partnership Project; Technical Specification Group Radio Access Network; Stage 2 functional specification of User Equipment (UE) positioning in UTRAN (Release 8)", 3GPP STANDARD; 3GPP TS 25.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 December 2008 (2008-12-01), pages 1-79, XP050367438,**

**Description**

**Claim of Priority under 35 U.S.C. §119**

The present Application for Patent claims priority to Provisional Application No. 61/182,544 entitled "METHOD AND APPARATUS FOR PERFORMING SEARCHES WITH MULTIPLE RECEIVE DIVERSITY (RXD) SEARCH MODES" filed May 29, 2009, and assigned to the assignee hereof.

**BACKGROUND**

**I. Field**

The present disclosure relates generally to communication, and more specifically to techniques for searching for cells in a wireless communication system.

**II. Relevant Background**

Wireless communication systems are widely deployed to provide various communication services such as voice, video, packet data, messaging, broadcast, etc. These wireless systems may be multiple-access systems capable of supporting multiple users by sharing the available system resources. Examples of such multiple-access systems include Code Division Multiple Access (CDMA) systems, Time Division Multiple Access (TDMA) systems, Frequency Division Multiple Access (FDMA) systems, Orthogonal FDMA (OFDMA) systems, and Single-Carrier FDMA (SC-FDMA) systems.

A wireless communication system may include a number of cells that can support communication for a number of user equipments (UEs). A UE may be within the coverage of one or more cells at any given moment. The UE may have just been powered on or may have lost coverage and thus may not know which cells are within range. The UE may perform a search to detect cells and to acquire timing and other information for the detected cells. It may be desirable to perform the search in a manner to obtain good performance, e.g., to detect as many cells as possible.

Attention is drawn to US 2003/108135 A1, describing a method for synchronizing a mobile terminal comprising M diversity branches to a wireless network using diversity combination to acquire the code transmitted from a base-station and to determine the frequency offset of the transmitted code.

Attention is drawn to JEAN-FRANOIS FRIGON ET AL: "Design and Implementation of a Baseband WCDMA Dual-Antenna Mobile Terminal", IEEE TRANSACTIONS ON CIRCUITS AND SYSTEMS PART I: REGULAR PAPERS, vol. 54, no. 3, 1 March 2007, describing a design and implementation of a baseband wide-band code-division multiple access (WCDMA) dual-antenna mobile terminal system-on-a-chip (SoC). Spatial diversity processing mitigates wireless channel impairments and is a key enabling technology for WCDMA to support high quality of service at high data rates and capacity.

Attention is drawn to EP 1 069713 A1, which discloses a radio apparatus for a radio communications system comprising means for determining a period of inactivity for said radio apparatus, and means for determining signal quality of a signal received during said period of inactivity.

**SUMMARY**

In accordance with the present invention a method, and an apparatus, as set forth in the independent claims, respectively, are provided. Preferred embodiments of the invention are described in the dependent claims.

Techniques for performing searches by a UE equipped with multiple receive antennas are described herein. In an aspect, multiple receive diversity (RxD) search modes may be supported by the UE. Each RxD search mode may be different from each remaining RxD search mode in (i) how correlation is performed for the multiple receive antennas, (ii) how correlation results for the multiple receive antennas are combined, (iii) how search results are reported for the multiple receive antennas, or (iv) a combination thereof. In one design, the UE may select an RxD search mode from among multiple RxD search modes supported by the UE. The UE may then perform at least one step of a search in accordance with the selected RxD search mode. In another design, the UE may perform a first step of a search in accordance with a first RxD search mode and perform a second step of the search in accordance with a second RxD search mode.

In another aspect, a UE may perform a search with interference cancellation to cancel signals from interfering cells. In one design, the UE may determine multiple complex weights for multiple receive antennas such that signals from interfering cells can be attenuated. The UE may then perform a search to detect at least one cell with the multiple complex weights applied to the multiple receive antennas. For example, the UE may correlate input samples for each receive antenna with a scrambling code for a cell. The UE may multiply the correlation result for each receive antenna with a complex weight for that receive antenna. The UE may then combine the weighted correlation results for all receive antennas to obtain a combined correlation result. The UE may detect the cell based on the combined correlation result.

Various aspects and features of the disclosure are described in further detail below.

## BRIEF DESCRIPTION OF THE DRAWINGS

FIG. 1 shows a wireless communication system.
FIG. 2A shows an exemplary frame structure.
FIG. 2B shows exemplary transmission of synchronization and pilot channels.
FIG. 3 shows a block diagram of a Node B and a UE.
FIGs. 4 to 6 show a search processor for different RxD search modes.

FIGS. 7 and 8 show processes for performing a search by a UE.
FIG. 9 shows a process for performing a search with interference cancellation.

## DETAILED DESCRIPTION

The search techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The search techniques described herein may be used for the systems and radio technologies mentioned above as well as other systems and radio technologies. For clarity, certain aspects of the search techniques are described below for WCDMA, and 3GPP terminology is used in much of the description below.

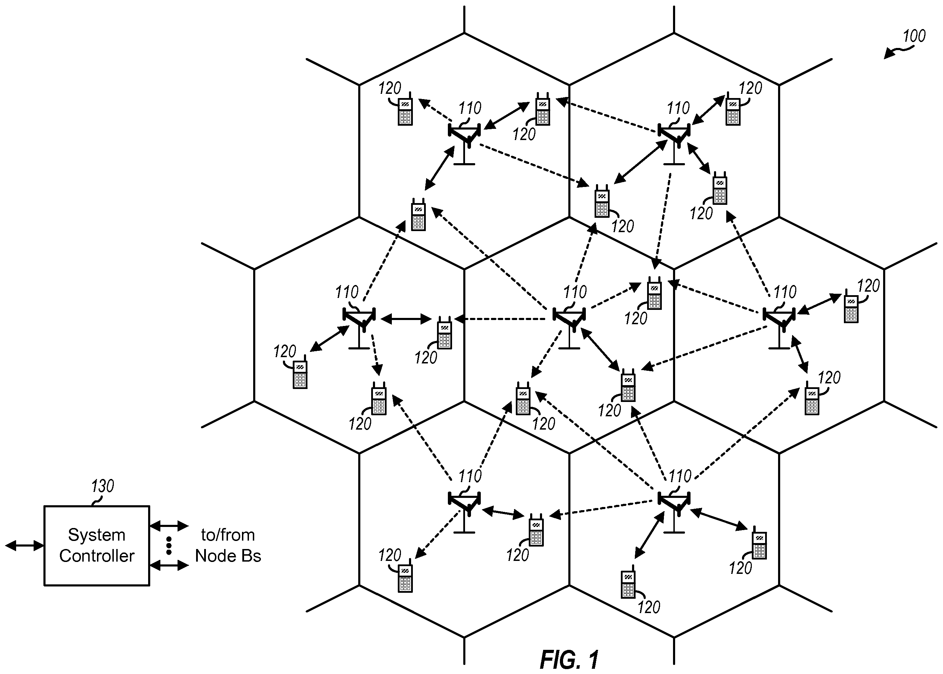

**FIG. 1** shows a wireless communication system 100 with multiple Node Bs 110. A Node B is a station that communicates with the UEs and may also be referred to as a base station, an evolved Node B (eNode B), an access point, etc. Each Node B 110 provides communication coverage for a particular geographic area. The term "cell" can refer to a coverage area of a Node B and/or a Node B subsystem serving this coverage area, depending on the context in which the term is used. A Node B may serve one or multiple (e.g., three) cells.

UEs 120 may be dispersed throughout the system, and each UE may be stationary or mobile. A UE may also be referred to as a mobile station, a mobile equipment, a terminal, an access terminal, a subscriber unit, a station, etc. A UE may be a cellular phone, a personal digital assistant (PDA), a wireless communication device, a handheld device, a wireless modem, etc. A UE may communicate with a Node B via the downlink and uplink. The downlink (or forward link) refers to the communication link from the Node B to the UE, and the uplink (or reverse link) refers to the communication link from the UE to the Node B. In FIG. 1, a solid line with double arrows indicates communication between a Node B and a UE. A broken line with a single arrow indicates a UE receiving downlink signals from a Node B. A UE may perform a search based on the downlink signals transmitted by the Node Bs.

A system controller 130 may couple to the Node Bs 110 and may provide coordination and control for these Node Bs. System controller 130 may be a single network entity or a collection of network entities.

A UE may perform a search to detect cells when the UE is first powered up, when the UE loses coverage, when the UE is idle, or when the UE is in active communication. The UE may perform the search based on known signals transmitted by each cell in the system. Different systems may utilize different synchronization and pilot signals/channels to assist searching by UEs. For clarity, synchronization and pilot signals/channels used for searches in WCDMA are described below.

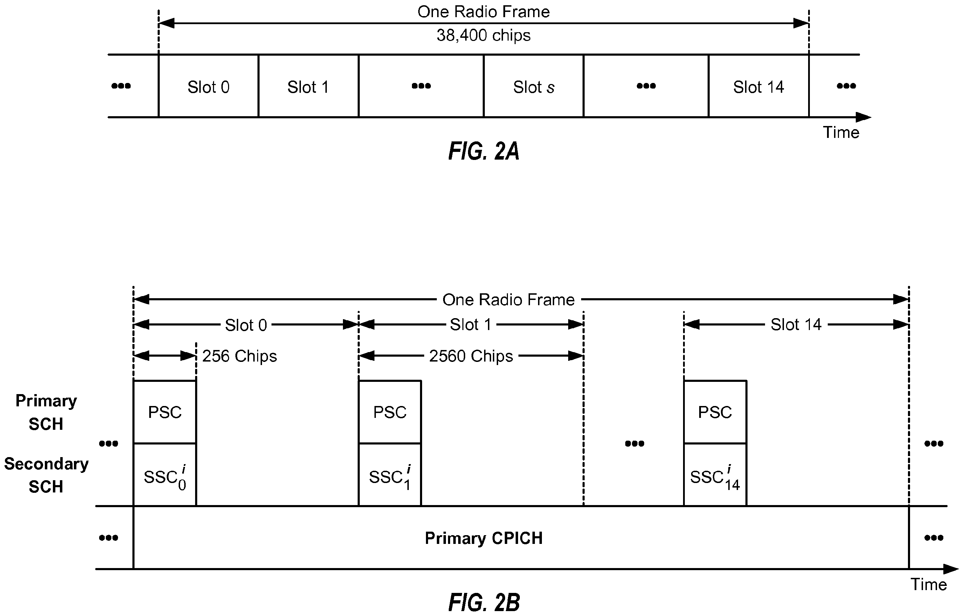

**FIG. 2A** shows a frame structure in WCDMA. The transmission timeline on the downlink is partitioned into units of radio frames. Each radio frame has a duration of 10 milliseconds (ms) and covers 38,400 chips. Each radio frame is further partitioned into 15 slots with indices of 0 through 14. Each slot has a duration of approximately 0.67 ms and covers 2560 chips.

**FIG. 2B** shows transmission of a synchronization channel (SCH) and a common pilot channel (CPICH) on the downlink by one cell in WCDMA. The SCH includes a primary SCH and a secondary SCH, which are transmitted in the first 256 chips of each 2560-chip slot. The primary SCH carries a 256-chip primary synchronization code (PSC) in the first 256 chips of each slot. The PSC is a predetermined sequence of 256 chips. All cells in the system use the same PSC.

The secondary SCH carries a sequence of 15 secondary synchronization codes (SSCs), which is also referred to as an SSC pattern, in the 15 slots of each radio frame. The SSC pattern is denoted as $SSC_0^i$ through $SSC_{14}^i$ in FIG. 2B, where *i* is an index for a scrambling code group. Each SSC is a predetermined sequence of 256 chips and is selected from a set of 16 available 256-chip codes.

In WCDMA, there are 64 scrambling code groups, which are associated with 64 different SSC patterns. Each scrambling code group includes eight scrambling codes and is associated with a different SSC pattern. Each cell in the system is assigned a specific scrambling code that is used to scramble data sent by that cell on the downlink. Each cell is thus associated with a specific SSC pattern determined by its assigned scrambling code. Each cell transmits its SSC pattern on the secondary SCH in each radio frame. Each cell also transmits a continuous pilot on the CPICH using the scrambling code assigned to that cell. The CPICH carries a predetermined sequence of modulation symbols scrambled by the scrambling code.

The PSC, SSC, SCH and CPICH are described in a document 3GPP TS 25.211, entitled "Physical Channels and Mapping of Transport Channels onto Physical Channels (FDD)," which is publicly available.

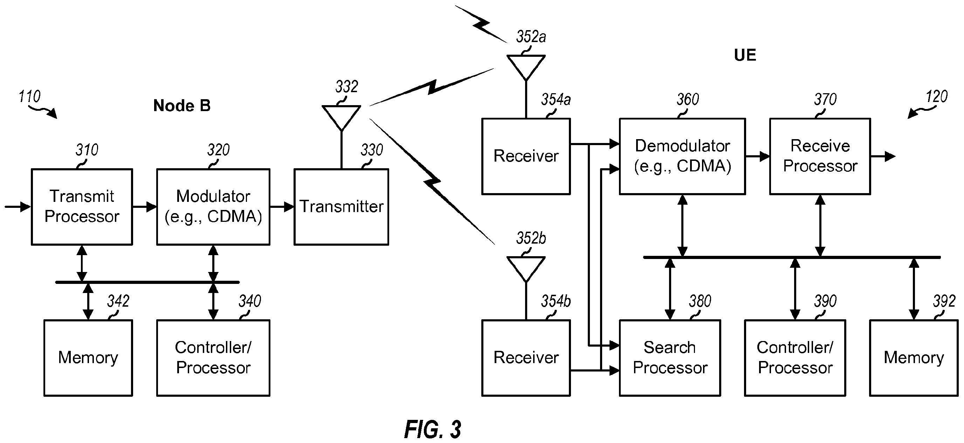

**FIG. 3** shows a block diagram of an exemplary design of a Node B 110 and a UE 120, which may be one of the Node Bs and one of the UEs in FIG. 1. In the exemplary design shown in FIG. 3, Node B 110 is equipped with a single transmit antenna 332, and UE 120 is equipped with two receive antennas 352a and 352b, which may be referred to as antennas 1 and 2, respectively. In general, Node B 110 and UE 120 may each be equipped with any number of antennas.

At Node B 110, a transmit processor 310 may receive traffic data for UEs being served and may process (e.g., encode, interleave, and symbol map) the traffic data to generate data symbols. Processor 310 may also generate overhead symbols for the primary SCH, the secondary SCH, and other overhead channels. Processor 310 may also generate pilot symbols for the CPICH. A modulator 320 may process the data symbols, the overhead symbols, and the pilot symbols (e.g., for CDMA) and may provide output samples to a transmitter 330. Modulator 320 may spread the symbols for each physical channel (except for SCH) with a channelization code for that channel, apply the scrambling code for a cell, scale the samples for each physical channel with a gain determined by the transmit power for that channel, and sum the scaled samples for these physical channels with the samples for the P-SCH and S-SCH, which have been scaled with gains determined by the transmit power for the P-SCH and S-SCH, to obtain the output samples. Transmitter 330 may process (e.g., convert to analog, amplify, filter, and frequency upconvert) the output samples and generate a downlink signal, which may be transmitted via antenna 332.

At UE 120, antennas 352a and 352b may receive the downlink signals from Node B 110 and other Node Bs. Each antenna 352 may provide a received signal to an associated receiver 354. Each receiver 354 may process (e.g., filter, amplify, frequency downconvert, and digitize) its received signal and may provide input samples to a demodulator 360 and a search processor 380. Search processor 380 may perform searches to detect cells and may provide search results for detected cells, as described below. Demodulator 360 may process the input samples in a manner complementary to the processing by modulator 320 and may provide symbol estimates, which may be estimates of the symbols transmitted by Node B 110. Demodulator 360 may implement a rake receiver that can process multiple signal instances in the received signal from each antenna 352 due to multiple signal paths between Node B 110 and that antenna. A receive processor 370 may process (e.g., symbol demap, deinterleave, and decode) the symbol estimates and may provide decoded data and signaling. In general, the processing by demodulator 360 and receive processor 370 at UE 120 may be complementary to the processing by modulator 320 and transmit processor 310, respectively, at Node B 110.

Controllers/processors 340 and 390 may direct the operation at Node B 110 and UE 120, respectively. Memories 342 and 392 may store data and program codes for Node B 110 and UE 120, respectively.

UE 120 may perform a search to detect cells and to ascertain the timing of detected cells. The UE may perform the search using various search processes. In general, the processing performed by the UE for the search may be dependent on the signals/channels transmitted by the cells. For clarity, the processing performed by the UE for the signals/channels shown in FIG. 2 is described below.

In a first search process, the UE may perform the search in three steps 1, 2 and 3 using the primary SCH, the secondary SCH, and the CPICH. The UE may perform each step as follows.

In step 1, the UE may search for the PSC transmitted on the primary SCH by correlating a received signal (or the input samples) at the UE with a locally generated PSC at different time offsets. For each time offset, the UE may correlate the received signal with the PSC at that time offset and may declare a detected PSC if the correlation result exceeds a detection threshold. The UE may thus use the primary SCH to detect the presence of a cell and to ascertain the slot timing of the cell.

In step 2, the UE may search for the SSCs transmitted on the secondary SCH to determine the SSC pattern used by each cell for which the PSC was detected. For a given detected cell, the UE may correlate the received signal in each slot with each of the 16 possible SSCs at the slot timing of the cell to determine which SSC was detected in that slot. The UE may obtain 15 detected SSCs for 15 consecutive slots. The UE may then ascertain which one of the 64 possible SSC patterns was transmitted based on the 15 detected SSCs in 15 consecutive slots. The UE can determine frame timing and the scrambling code group used for the detected cell based on the detected SSC pattern.

In step 3, the UE may process the CPICH to determine the scrambling code used by each cell for which the SSC pattern was detected. For a given detected cell, the UE may determine the eight possible scrambling codes associated with the detected SSC pattern for the cell. The UE may correlate the received signal with each of the eight possible scrambling codes at the frame timing of the cell and may declare a detected scrambling code if the correlation result exceeds a threshold. The UE may also perform correlation with the detected scrambling code for different time offsets to obtain an estimate of a channel impulse response for the detected cell.

In a second search process, the UE may perform a search in three steps A, B and C using the primary SCH and the CPICH. Step A may also be referred to as a cell detection step. Step B may also be referred to as a code detection step. Step C may also be referred to as a channel estimation step. The UE may perform each step as follows.

In step A, the UE may search for the PSC transmitted on the primary SCH by correlating a received signal with a locally generated PSC at different time offsets. The UE may detect the presence of a cell and ascertain the slot timing of the cell. Step A may correspond to step 1 above.

In step B, the UE may process the CPICH to determine the scrambling code used by each cell for which the PSC was detected. For a given detected cell, the UE may have 15 possible frame timing hypotheses based on the detected slot timing for the cell. The UE may evaluate each of the 512 possible scrambling codes at each of the 15 possible frame timing hypotheses. The UE may thus evaluate 7680 total hypotheses, with each hypothesis corresponding to a specific scrambling code at a specific frame timing. If a search window is used for each hypothesis, the UE may perform correlation over only a small search window covering just a few time offsets (e.g., a few chips) in order to reduce the amount of processing for step B. The UE may declare a detected scrambling code if a correlation result exceeds a threshold.

In step C, the UE may process the CPICH to estimate a channel impulse response for each cell for which the scrambling code was detected. For a given detected cell, the UE may correlate the received signal with the detected scrambling code at different time offsets within a larger search window (e.g., 128, 192 or 256 chips) to obtain the channel impulse response estimate for the detected cell. The channel impulse response may also be referred to as a channel profile, a path profile, etc. The search window may be placed at a location determined by the frame timing provided by step B, e.g., may be centered at the frame timing.

The two search processes described above may allow the UE to perform a search in incremental steps and to use the information obtained from each step for processing the next step. The first search process may allow the UE to more evenly partition the search into three steps. However, the first search process may take longer since step 2 utilizes the secondary SCH. Each cell transmits its SCH pattern once in each radio frame and further transmits each SSC in only 10 percent of a slot. The UE may be able to detect the SCH pattern after one radio frame but may need to accumulate over multiple radio frames (e.g., due to the low duty cycle of the SSC) in order to improve detection performance. The second search process may allow the UE to complete a search sooner and may also have improved performance since step B utilizes the CPICH, which is transmitted continuously and possibly at higher power than the secondary SCH. The UE may also perform a search using other search processes, which may partition the search in other manners.

The UE may be equipped with multiple receive antennas that may be used to receive signals from cells. Receive diversity (RxD) may be achieved by receiving a signal from a given cell via one or a combination of the multiple receive antennas. Receive diversity may improve performance.

In an aspect, multiple RxD search modes may be supported for searches. Each RxD search mode may be defined by how correlation is performed for multiple receive antennas, how correlation results for different antennas are combined, how search results are reported for the multiple receive antennas, etc. Different RxD search modes may have different characteristics, as described below. Each RxD search mode may be used for one or more steps of a search.

Table 1 lists three RxD search modes in accordance with one exemplary design. Table 1 provides a short description of each RxD search mode and also lists possible step(s) in which each RxD search mode might be used. Each RxD search mode is described in further detail below.

Table 1

| RxD Search Mode | Description | Steps |
|---|---|---|
| RxD Search Mode 1 | Perform correlation for each receive antenna. Combine correlation results separately for each receive antenna. Report correlation results separately for each receive antenna. | 3, C |

(continued)

| RxD Search Mode | Description | Steps |
|---|---|---|
| RxD Search Mode 2 | Perform correlation for each receive antenna. Combine correlation results across receive antennas. Report combined correlation results for all receive antennas. | 1,2,A, B |
| RxD Search Mode 3 | Perform correlation for each receive antenna. Scale and combine correlation results across receive antennas to cancel signals from interfering cells. Report combined correlation results for all receive antennas. | |

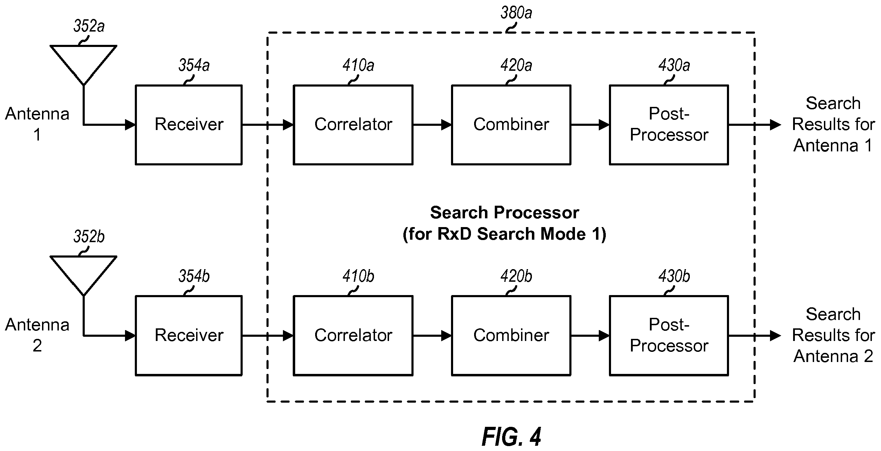

**FIG. 4** shows a block diagram of a design of a search processor 380a for RxD search mode 1, which may be one configuration of search processor 380 in FIG. 3. Each receiver 354 may process a received signal from an associated antenna 352 and may provide input samples to an associated correlator 410 within search processor 380a. Each correlator 410 may perform correlation on its input samples with a code and provide correlation results. The code may be dependent on the type of search being performed and may be a PSC, an SSC, a scrambling code, etc. Although each signal path is illustrated as having its own corresponding hardware, it will be appreciated that in other designs the different signals may share the same hardware components and use them in a time division manner, for example.

The correlation by each correlator 410 may be expressed as:

$$C_m(k) = \sum_{n=0}^{N-1} r_m(n-k) \cdot c^*(n) \ , \qquad \text{Eq. (1)}$$

where $r_m(n)$ is an input sample for antenna $m$ in sample period $n$,
$c(n)$ is the code used for the correlation,
$C_m(k)$ is a correlation result for antenna $m$ at time offset $k$,
N is the number of input samples to correlate, and
" * " denotes a complex conjugate.

For correlation of the primary SCH (e.g., in step 1 or step A described above), $c(n)$ may be the 256-chip sequence for the PSC, and N may be equal to 256. For correlation of the secondary SCH (e.g., in step 2), $c(n)$ may be a 256-chip sequence for one SSC, and N may be equal to 256. For correlation of the CPICH (e.g., in step 3, step B, or step C), $c(n)$ may be a scrambling code, and N may be equal to 128, 256, 512, 1024, 2048, 4096, etc. The input samples may be complex values, and the correlation result $C_m(k)$ may be a complex value.

Each correlator 410 may perform correlation with code $c(n)$ for different time offsets within a search window and may provide a correlation result for each time offset. Each correlator 410 may also perform correlation with code $c(n)$ in different time intervals and may provide a set of correlation results for different time offsets in each time interval. The duration of each time interval may be dependent on the type of search being perform and may be one slot for the primary SCH, one frame for the secondary SCH, N chips for the CPICH, etc.

Each correlator 410 may provide its correlation results to an associated combiner 420. Each combiner 420 may coherently and/or non-coherently combine correlation results for each time offset. For each time offset, each combiner 420 may coherently combine correlation results obtained in different time intervals, as follows:

$$C_{CC,m}(k) = \sum_{\ell} C_m(k,\ell) \ , \qquad \text{Eq. (2)}$$

where $C_m(k,\ell)$ is a correlation result for antenna $m$ at time offset $k$ in time interval $\ell$, and
$C_{CC,m}(k)$ is a coherently combined correlation result for antenna $m$ at time offset $k$.

For each time offset, each combiner 420 may also non-coherently combine correlation results obtained in different time intervals, as follows:

$$C_{NC,m}(k) = \sum_{\ell} |C_m(k,\ell)|^2 \ , \qquad \text{Eq. (3)}$$

where $C_{NC,m}(k)$ is a non-coherently combined correlation result for antenna $m$ at time offset k.

As shown in equation (2), coherent combining sums complex values such that the phases of the complex values affect the result. As shown in equation (3), non-coherent combining sums real energy values. Coherent and non-coherent combining may be used to average noise and improve the accuracy of the correlation results. Coherent combining may provide better performance but may be limited to situations in which a wireless channel has not changed noticeably, to avoid combining complex values with large phase difference. Non-coherent combining may be used for most situations. Both coherent and non-coherent combining may also be performed.

Each combiner 420 may compute the energy of the combined correlation result for each time offset, as follows:

$$E_m(k) = C_{NC,m}(k) \ , \qquad\qquad\qquad \text{Eq. (4a)}$$

or

$$E_m(k) = |C_{CC,m}(k)|^2 \ , \qquad\qquad\qquad \text{Eq. (4b)}$$

where $E_m(k)$ is the energy for antenna $m$ at time offset $k$. $E_m(k)$ is indicative of the strength of a signal path from a cell to antenna $m$ at delay $k$.

Each post-processor 430 may sort the energies for different time offsets and may provide search results for its receive antenna. In one design, each post-processor 430 may identify each time offset with energy exceeding a particular threshold and may provide the energy and time offset. In another design, each post-processor 430 may provide the energy and time offset for L strongest peaks at L different time offsets, where L may be one or greater. The search results for each receive antenna may also comprise other information. The search results may be used to assign fingers of a rake receiver to process strong signal paths and/or for other purposes.

As shown in FIG. 4, correlator 410a, combiner 420a, and post-processor 430a may search on the first receive antenna 352a and may provide search results for this antenna. Similarly, correlator 410b, combiner 420b, and post-processor 430b may search on the second receive antenna 352b and may provide search results for this antenna. The search results for the two receive antennas may be reported separately. RxD search mode 1 may be especially useful for step 3 and step C to obtain a channel profile for each receive antenna for finger assignment.

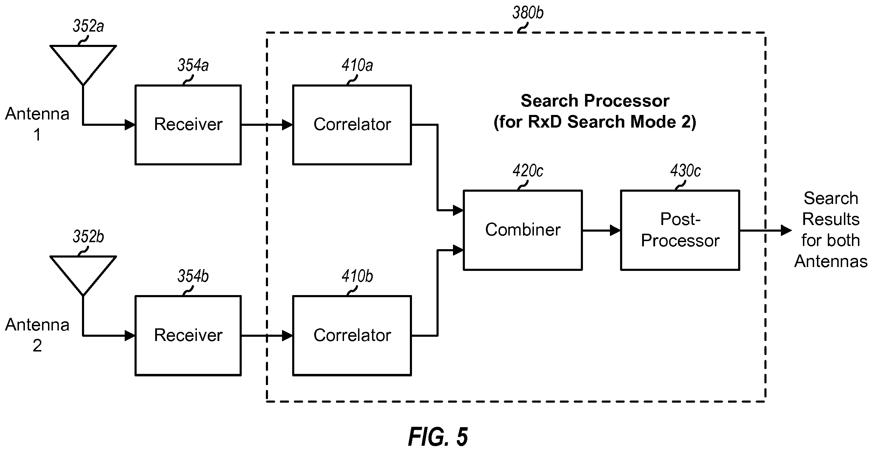

**FIG. 5** shows a block diagram of a design of a search processor 380b for RxD search mode 2, which may be another configuration of search processor 380 in FIG. 3. Each receiver may process a received signal from an associated antenna 352 and may provide input samples to an associated correlator 410 within search processor 380b. Each correlator 410 may perform correlation on its input samples with a code (e.g., a PSC, an SSC, or a scrambling code) at different time offsets and may provide correlation results for different time offsets, as described above.

A combiner 420c may receive correlation results from both correlators 410a and 410b and may combine the correlation results, as follows:

$$E(k) = |C_{CC,1}(k)|^2 + |C_{CC,2}(k)|^2 \ , \qquad\qquad\qquad \text{Eq. (5a)}$$

or

$$E(k) = C_{NC,1}(k) + C_{NC,2}(k) \ , \qquad\qquad\qquad \text{Eq. (5b)}$$

where $E(k)$ is the total energy for the two receive antennas at time offset $k$.

Combiner 420c may obtain $E(k)$ for different time intervals and may non-coherently combine $E(k)$ across time intervals for each time offset $k$. Combiner 420c may then provide the energies for different time offsets to a post-processor 430c. Post-processor 430c may sort the energies for different time offsets and may provide search results together for both receive antennas. In one design, post-processor 430c may identify each time offset with energy exceeding a particular threshold and may provide the energy and time offset. In another design, post-processor 430c may provide the energy and time offset for L strongest peaks at L different time offsets. The search results for both receive antennas may also comprise other information.

In RxD search mode 2, the search results are provided for both receive antennas, and the two antennas cannot be distinguished from the search results. If the signal paths on the two receive antennas are close together, then RxD search mode 2 may increase the peak energy. RxD search mode 2 may be especially useful for step 1, step 2, step A, and step B since a primary purpose of these steps is to detect codes and timing, and the peaks from individual antennas are not important. In particular, the main purpose of step 1 and step A may be high probability of detection of slot boundaries. The main purpose of step 2 and step B may be high probability of detection of frame timing and either SSC pattern (step 2) or scrambling code (step B). If the peak energies are improved due to combining across receive antennas, then the probability of detection for steps 1, 2, A and B may improve.

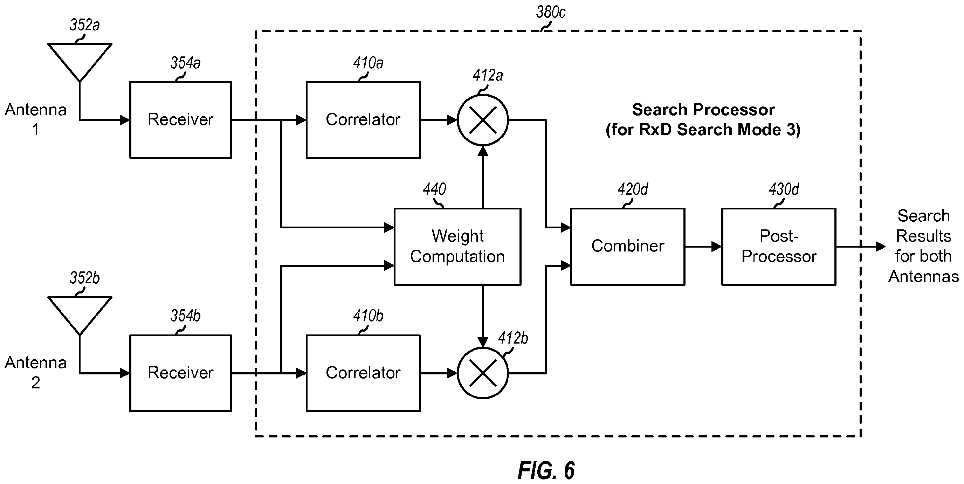

FIG. 6 shows a block diagram of a design of a search processor 380c for RxD search mode 3, which may be yet another configuration of search processor 380 in FIG. 3. Each receiver 354 may process a received signal from an associated antenna 352 and may provide input samples to an associated correlator 410 within search processor 380c. Each correlator 410 may perform correlation on the input samples with a code (e.g., the PSC, an SSC, or a scrambling code) at different time offsets and may provide correlation results for different time offsets, as described above.

RxD search mode 3 performs interference cancellation to attenuate signals from interfering cells. The interference cancellation may be achieved by (i) multiplying the input samples for each receive antenna with a complex weight for that antenna and (ii) combining the weighted samples for the two receive antennas, as follows:

$$r(n) = \alpha \cdot r_1(n) + \beta \cdot r_2(n) \; , \qquad\qquad \text{Eq. (6)}$$

where $\alpha$ is a complex weight for antenna 1, and $\beta$ is a complex weight for antenna 2.

The complex weights $\alpha$ and $\beta$ for the two receive antennas may be selected to attenuate the signals from interfering cells. Correlation may then be performed on the weighted samples $r(n)$ in a similar manner as the input samples to obtain a correlation result $C(k)$ for the two receive antennas. Correlation may thus be performed for all receive antennas with a complex weight applied to each receive antenna.

The complex weights $\alpha$ and $\beta$ may be assumed to be constant for the duration of correlation. In this case, correlation may be performed on the input samples for each receive antenna $m$ to obtain a correlation result $C_m(k)$ for that antenna. The correlation results for the two receive antennas may then be multiplied with the complex weights and then combined, as follows:

$$C(k) = \alpha \cdot C_1(k) + \beta \cdot C_2(k) \; . \qquad\qquad \text{Eq. (7)}$$

Applying the complex weights $\alpha$ and $\beta$ to the correlation results as shown in equation (7), instead of to the input samples as shown in equation (6), may reduce the number of multiply operations to achieve interference cancellation and may provide equivalent combined correlation results $C(k)$ when the complex weights are approximately constant for the duration of the correlation.

As shown in FIG. 6, correlator 410a may provide correlation results $C_1(k)$ for antenna 1 at different time offsets to a multiplier 412a, which may also receive the complex weight $\alpha$ from a weight computation unit 440. Multiplier 412a may multiply each correlation result with the weight $\alpha$ and may provide the weighted correlation result to a combiner 420d. Similarly, correlator 410b may provide correlation results $C_2(k)$ for antenna 2 at different time offsets to a multiplier 412b, which may also receive the complex weight $\beta$ from computation unit 440. Multiplier 412b may multiply each correlation result with the weight $\beta$ and may provide the weighted correlation result to combiner 420d.

Combiner 420d may receive the weighted correlation results from both multipliers 412a and 412b and may combine the weighted correlation results, e.g., as shown in equation (7). Combiner 420d may obtain combined correlation results $C(k)$ for different time intervals and may non-coherently combine $C(k)$ across time intervals for each time offset $k$. Combiner 420d may then compute the energies of the combined correlation results and may provide the energies for different time offsets to a post-processor 430d. Post-processor 430d may sort the energies for different time offsets and may provide search results for both receive antennas. In one design, post-processor 430d may identify each time offset with energy exceeding a particular threshold and may provide the energy and time offset. In another design, post-processor 430d may provide the energy and time offset for L strongest peaks at L different time offsets. The search results for both receive antennas may also comprise other information.

Computation unit 440 may compute and provide the complex weights $\alpha$ and $\beta$ for the two receive antennas. Computation unit 440 may determine the complex weights in various manners. In one design, computation unit 440 may determine a 2x2 correlation matrix **R,** as follows:

$$\mathbf{R} = \begin{bmatrix} \mathrm{Avg}\{r_1(n) \cdot r_1^*(n)\} & \mathrm{Avg}\{r_1(n) \cdot r_2^*(n)\} \\ \mathrm{Avg}\{r_2(n) \cdot r_1^*(n)\} & \mathrm{Avg}\{r_2(n) \cdot r_2^*(n)\} \end{bmatrix}, \qquad \text{Eq. (8)}$$

where $\mathrm{Avg}\{r_i(n) \cdot r_j^*(n)\}$ denotes an average of the correlation between the input samples for antenna $i$ and the input samples for antenna $j$, where $i \in \{1, 2\}$ and $j \in \{1, 2\}$. $\mathrm{Avg}\{r_i(n) \cdot r_j^*(n)\}$ may be obtained by multiplying $r_i(n)$ with $r_j^*(n)$ and averaging the resultant product over a sufficient number of samples. Matrix $\mathbf{R}$ includes four complex values in two rows and two columns.

Computation unit 440 may perform eigenvalue decomposition of matrix $\mathbf{R}$, as follows:

$$\mathbf{R} = \mathbf{E} \, \Lambda \, \mathbf{E}^H, \qquad \text{Eq. (9)}$$

where $\mathbf{E}$ is a 2x2 unitary matrix of eigenvectors of $\mathbf{R}$,
$\Lambda$ is a 2x2 diagonal matrix of eigenvalues of $\mathbf{R}$, and
"$H$" denotes a Hermitian or conjugate transpose.

Unitary matrix $\mathbf{E}$ is characterized by the property $\mathbf{E}^H \mathbf{E} = \mathbf{I}$, where $\mathbf{I}$ is an identity matrix. The columns of $\mathbf{E}$ are orthogonal to one another, and each column has unit power. Diagonal matrix $\Lambda$ includes positive values along the diagonal and zeros elsewhere for non-degenerate cases where R is positive definite. The diagonal elements of $\Lambda$ are eigenvalues of $\mathbf{R}$. The smallest eigenvalue value in $\Lambda$ may be identified, and the eigenvector corresponding to this smallest eigenvalue value may be selected. The selected eigenvector may be (i) the first column of $\mathbf{E}$ if the upper left element of $\Lambda$ is smaller than the lower right element of $\Lambda$ or (ii) the second column of $\mathbf{E}$ if the lower right element of $\Lambda$ is smaller than the upper left element of $\Lambda$. The complex conjugate of the two entries in the selected eigenvector may be provided as the two complex weights $\alpha$ and $\beta$.

In RxD search mode 3, interference cancellation may be performed to enable or improve detection of a signal from a cell. In one design, interfering cells may be identified and the complex weights may be computed to attenuate the signals from these cells. In another design, interfering cells may be identified, and interference cancellation may be performed for each identified cell, e.g., successively for one cell at a time.

RxD search mode 3 may be used for any of the steps described above for the first and second search processes. RxD search mode 3 may be especially useful for correlation with a scrambling code for a weak detected cell.

RxD search mode 3 may be used to search for cells for positioning. For example, RxD search mode 3 may be used to measure time of arrival (TOA) of signals from different cells. The TOAs may be used to determine observed time difference of arrival (OTDOA) for pairs of cells. OTDOAs for a sufficient number of pairs of cells (e.g., two or more pairs of cells) and the known location of the cells may be used to derive a location estimate for the UE using trilateration.

Three exemplary RxD search modes have been described above. Other RxD search modes may also be supported and may perform correlation, combining, and/or reporting in other manners. Different RxD search modes may be used for different types of searches, e.g., depending on the purposes of the searches. For example, RxD search mode 2 may be used for steps A and B of the second search process in order to detect slot and frame timing and to determine a scrambling code. RxD search mode 1 may be used for step C of the second search process to determine a channel profile for each receive antenna.

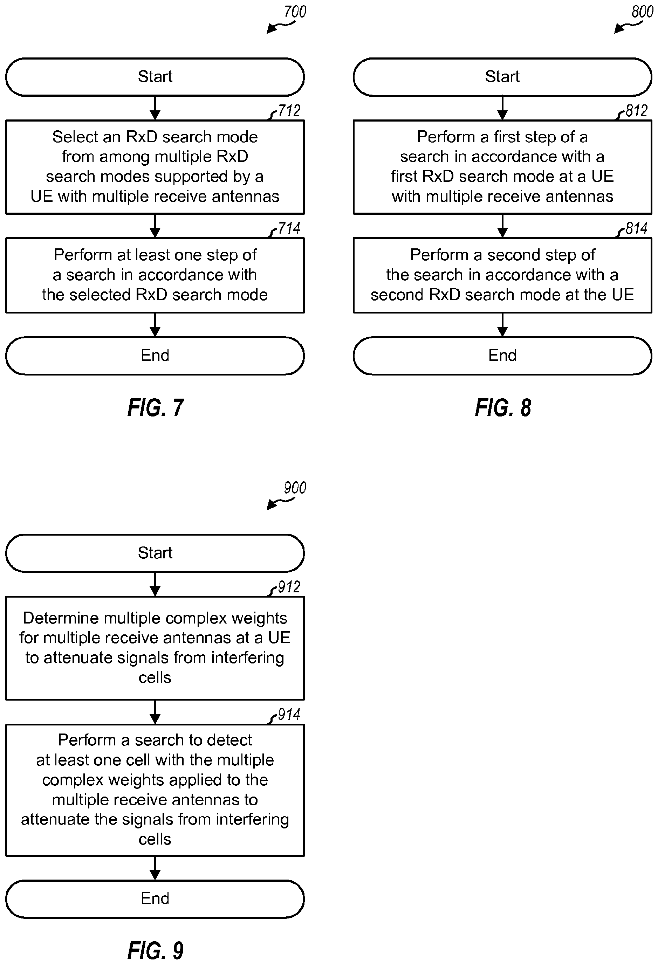

FIG. 7 shows a design of a process 700 for performing a search by a UE with multiple receive antennas. The UE may select an RxD search mode from among multiple RxD search modes supported by the UE (block 712). Each RxD search mode may be different from each remaining RxD search mode in (i) correlation for the multiple receive antennas, (ii) combining of correlation results for the multiple receive antennas, (iii) reporting of search results for the multiple receive antennas, or (iv) a combination thereof. For example, one RxD search mode may perform correlation for the multiple receive antennas differently than another RxD search mode and/or combine correlation results for the multiple receive antennas differently than yet another RxD search mode. In any case, the UE may perform at least one step of a search in accordance with the selected RxD search mode (block 714).

The multiple RxD search modes may include RxD search mode 1 in which correlation is performed separately for each receive antenna, correlation results are combined separately for each receive antenna, and search results are reported separately for each receive antenna. The multiple RxD search modes may include RxD search mode 2 in which correlation is performed separately for each receive antenna, correlation results for the multiple receive antennas are combined, and search results are reported together for all receive antennas. The multiple RxD search modes may include RxD search mode 3 in which correlation is performed for all receive antennas with a complex weight applied to each receive antenna, correlation results for the multiple receive antennas are combined, and search results are reported together for all receive antennas. The complex weight for each receive antenna may be determined to attenuate signals from interfering cells to enable or improve detection of a signal from another cell. The multiple RxD search modes may also include different and/or additional RxD search modes.

In one design, the search may include a cell detection step (e.g., step A) to detect cells and to determine slot timing of each detected cell. The cell detection step may be performed in accordance with the selected RxD search mode, which may be RxD search mode 2. In one design, the UE may correlate input samples for each receive antenna with a PSC to obtain a correlation result for the receive antenna. The UE may combine correlation results for the multiple receive antennas to obtain a combined correlation result. The UE may repeat the process for each time offset or sample period. The UE may then determine search results (e.g., a detected cell, slot timing, etc.) based on combined correlation results for different time offsets.

In one design, the search may include a code detection step (e.g., step B) to determine a scrambling code used by a detected cell. The code detection step may be performed in accordance with the selected RxD search mode, which may be RxD search mode 2. In one design, the UE may correlate input samples for each receive antenna with each of a plurality of (e.g., 512) possible scrambling codes to obtain a plurality of correlation results for the plurality of possible scrambling codes for the receive antenna. The UE may combine correlation results for the multiple receive antennas for each scrambling code to obtain a combined correlation result for the scrambling code. The UE may repeat the correlation and combining for each of a plurality of (e.g., 15) frame timing hypotheses and may obtain a plurality of combined correlation results for the plurality of frame timing hypotheses for each scrambling code and each receive antenna. The UE may then determine search results (e.g., a scrambling code, frame timing, etc.) based on all combined search results.

In one design, the search may include a channel estimation step (e.g., step C) to determine a channel profile for each receive antenna for a detected cell. The channel estimation step may be performed in accordance with the selected RxD search mode, which may be RxD search mode 1. In one design, the UE may correlate input samples for each receive antenna with a scrambling code for the detected cell at a plurality of time offsets to obtain a plurality of correlation results for the plurality of time offsets for the receive antenna. The UE may combine correlation results obtained in different time intervals for each time offset and each receive antenna. The UE may then determine search results (e.g., a channel profile) for each receive antenna based on a plurality of combined correlation results for the plurality of time offsets for that receive antenna.

FIG. 8 shows a design of a process 800 for performing a search by a UE with multiple receive antennas. The UE may perform a first step of a search in accordance with a first RxD search mode (block 812). The UE may perform a second step of the search in accordance with a second RxD search mode (block 814). The second RxD search mode may be different from the first RxD search mode in correlation for the multiple receive antennas, combining of correlation results for the multiple receive antennas, reporting of search results for the multiple receive antennas, or a combination thereof.

In one design, for the first RxD search mode, the UE may perform correlation separately for each receive antenna, combine correlation results for the multiple receive antennas, and report search results together for all receive antennas. In one design, for the second RxD search mode, the UE may perform correlation separately for each receive antenna, combine correlation results separately for each receive antenna, and report search results separately for each receive antenna. The first and second RxD search modes may also perform correlation, combing, and/or reporting in other manners.

In one design, the first step of the search may comprise (i) detecting cells and determining the slot timing of each detected cell or (ii) determining a scrambling code used by a detected cell. In one design, the second step of the search may comprise determining a channel profile for each receive antenna for a detected cell. The first and second steps may also comprise other actions.

FIG. 9 shows a design of a process 900 for performing a search with interference cancellation by a UE with multiple receive antennas. The UE may determine multiple complex weights for multiple receive antennas to attenuate signals from interfering cells (block 912). The UE may then perform a search to detect at least one cell with the multiple complex weights applied to the multiple receive antennas to attenuate the signals from interfering cells (block 914).

In one design of block 912, the UE may obtain a correlation matrix based on input samples for the multiple receive antennas, e.g., as shown in equation (8). The UE may decompose the correlation matrix (e.g., with eigenvalue decomposition) to obtain a first matrix of eigenvalues and a second matrix of eigenvectors, e.g., as shown in equation (9). The UE may identify an eigenvector in the second matrix associated with a smallest eigenvalue in the first matrix. The UE may then use the complex conjugate of the elements of the identified eigenvector as the multiple complex weights for the multiple receive antennas.

In one design of block 914, the UE may correlate input samples for each receive antenna with a scrambling code for a detected cell to obtain a correlation result for the receive antenna. The UE may multiply the correlation result for each receive antenna with a complex weight for the receive antenna. The UE may then combine the weighted correlation results for the multiple receive antennas to obtain a combined correlation result, e.g., as shown in equation (7). Equivalently, the UE may multiply the input samples for each receive antenna with the complex weight for that antenna. The UE may combine the weighted samples for all receive antennas, e.g., as shown in equation (6). The UE may then perform correlation based on the combined samples.

The UE may obtain at least one time measurement for at least one cell based on the search. A location estimate for the UE may be obtained based on the at least one time measurement for the at least one cell. The UE may also obtain other search results and/or may use the search results in other manners for other purposes.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media include both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations. Thus, the disclosure is not intended to be limited to the examples and designs described herein but is to be accorded the widest scope consistent with the claims.

**Claims**

1. A method for wireless communication, comprising:

   selecting (712) a receive diversity, RxD, search mode from among multiple RxD search modes supported by a user equipment, UE (120), with multiple receive antennas (352a, 352b), each RxD search mode being different from each remaining RxD search mode in at least one of correlation for the multiple receive antennas (352a, 352b), combining of correlation results for the multiple receive antennas, and reporting of search results for the multiple receive antennas; and
   performing (714) at least one step of a search in accordance with the selected RxD search mode; and
   wherein the multiple RxD search modes include an RxD search mode in which correlation is performed for all receive antennas with a complex weight applied to each receive antenna, correlation results for the multiple receive antennas are combined, and search results are reported together for all receive antennas; and further comprising:

   determining the complex weight for each receive antenna (352a, 352b) to attenuate signals from interfering cells to enable or improve detection of a signal from another cell;

   wherein the determining the multiple complex weights for the multiple receive antennas (352a, 352b) comprises:

   obtaining a correlation matrix, the correlation matrix comprising averages of the correlation between input samples for the multiple receive antennas (352a, 352b);
   decomposing the correlation matrix to obtain a first matrix of eigenvalues and a second matrix of eigenvectors;
   identifying an eigenvector in the second matrix associated with a smallest eigenvalue in the first matrix; and
   using the complex conjugates of the elements of the identified eigenvector as the multiple complex weights for the multiple receive antennas (352a, 352b).

2. The method of claim 1, wherein the multiple RxD search modes include an RxD search mode in which correlation is performed separately for each receive antenna (352a, 352b), correlation results are combined separately for each receive antenna, and search results are reported separately for each receive antenna; and/or
   wherein the multiple RxD search modes include an RxD search mode in which correlation is performed separately for each receive antenna (352a, 352b), correlation results for the multiple receive antennas (352a, 352b) are combined, and search results are reported together for all receive antennas.

3. The method of claim 1, wherein the search comprises a cell detection step to detect at least one cell and to determine slot timing of each detected cell, and wherein the performing at least one step of the search comprises performing the cell detection step in accordance with the selected RxD search mode; and preferably
   wherein the performing the cell detection step in accordance with the selected RxD search mode comprises:

   correlating input samples for each receive antenna (352a, 352b) with a primary synchronization code, PSC, to obtain a correlation result for the receive antenna;
   combining correlation results for the multiple receive antennas to obtain a combined correlation result; and
   determining search results based on the combined correlation result.

4. The method of claim 1, wherein the search comprises a code detection step to determine a scrambling code used by a detected cell, and wherein the performing at least one step of the search comprises performing the code detection step in accordance with the selected RxD search mode; and preferably
   wherein the performing the code detection step in accordance with the selected RxD search mode comprises:

   correlating input samples for each receive antenna (352a, 352b) with each of a plurality of possible scrambling codes to obtain a plurality of correlation results for the plurality of possible scrambling codes for the receive antenna;
   combining correlation results for the multiple receive antennas (352a, 352b) for each scrambling code to obtain a combined correlation result for the scrambling code; and
   determining search results based on a plurality of combined correlation results for the plurality of scrambling codes.

**5.** The method of claim 4, wherein the performing the code detection step in accordance with the selected RxD search mode comprises:

correlating input samples for each receive antenna (352a, 352b) for each of a plurality of frame timing hypotheses to obtain a plurality of correlation results for the plurality of frame timing hypotheses for the receive antenna; combining correlation results for the multiple receive antennas (352a, 352b) for each frame timing hypothesis to obtain a combined correlation result for the frame timing hypothesis; and determining search results based on a plurality of combined correlation results for the plurality of frame timing hypotheses.

**6.** The method of claim 8, wherein the performing the code detection step in accordance with the selected RxD search mode comprises:

correlating input samples for each receive antenna (352a, 352b) with each of a plurality of possible scrambling codes to obtain a plurality of correlation results for the plurality of possible scrambling codes for the receive antenna (352a, 352b); combining correlation results for the multiple receive antennas (352a, 352b) for each scrambling code to obtain a combined correlation result for the scrambling code; repeating the correlating and the combining for each of a plurality of frame timing hypotheses; and determining search results based on a plurality of combined correlation results for the plurality of scrambling codes for each of the plurality of frame timing hypotheses.

**7.** The method of claim 1, wherein the search comprises a channel estimation step to determine a channel profile for each receive antenna (352a, 352b) for a detected cell, and wherein the performing at least one step of the search comprises performing the channel estimation step in accordance with the selected RxD search mode; and preferably wherein the performing the channel estimation step in accordance with the selected RxD search mode comprises:

correlating input samples for each receive antenna with a scrambling code for the detected cell at a plurality of time offsets to obtain a plurality of correlation results for the plurality of time offsets for the receive antenna (352a, 352b); combining correlation results obtained in different time intervals for each time offset and each receive antenna (352a, 352b); and determining search results for each receive antenna (352a, 352b) based on a plurality of combined correlation results for the plurality of time offsets for the receive antenna.

**8.** The method of claim 1, further comprising:

selecting a second receive diversity, RxD, search mode from among the multiple RxD search modes supported by the UE; and performing at least one other step of the search in accordance with the selected second RxD search mode.

**9.** An apparatus for wireless communication, comprising:

means for selecting a receive diversity, RxD, search mode from among multiple RxD search modes supported by a user equipment, UE (120), with multiple receive antennas (352a, 352b), each RxD search mode being different from each remaining RxD search mode in at least one of correlation for the multiple receive antennas (352a, 352b), combining of correlation results for the multiple receive antennas (352a, 352b), and reporting of search results for the multiple receive antennas (352a, 352b); and means for performing at least one step of a search in accordance with the selected RxD search mode; and wherein the multiple RxD search modes include an RxD search mode in which correlation is performed for all receive antennas (352a, 352b) with a complex weight applied to each receive antenna (352a, 352b), correlation results for the multiple receive antennas (352a, 352b) are combined, and search results are reported together for all receive antennas (352a, 352b); and further comprising:

means for determining (440) the complex weight for each receive antenna (352a, 352b) to attenuate signals from interfering cells to enable or improve detection of a signal from another cell, the means for determining the multiple complex weights for the multiple receive antennas (352a, 352b) comprises:

means for obtaining a correlation matrix, the correlation matrix comprising averages of the correlation between on input samples for the multiple receive antennas;

means for decomposing the correlation matrix to obtain a first matrix of eigenvalues and a second matrix of eigenvectors;

means for identifying an eigenvector in the second matrix associated with a smallest eigenvalue in the first matrix; and

means for using the complex conjugates of the elements of the identified eigenvector as the multiple complex weights for the multiple receive antennas; and/or

wherein the means for performing the search comprises:

means for correlating input samples for each receive antenna with a scrambling code for a detected cell to obtain a correlation result for the receive antenna;

means for multiplying the correlation result for each receive antenna (352a, 352b) with a complex weight for the receive antenna (352a, 352b); and

means for combining weighted correlation results for the multiple receive antennas to obtain a combined correlation result.

10. A computer-readable storage medium comprising code, which, when executed by a computer, causes the computer to perform operations for wireless communication, the computer-readable storage medium comprising:

code for causing the computer to carry out the steps of any of claims 1-8.

**Patentansprüche**

1. Ein Verfahren zur Drahtloskommunikation, das Folgendes aufweist:

Auswählen (712) eines Empfangsdiversitäts- bzw. RxD-Suchmodus (RxD = receive diversity) aus mehreren RxD-Suchmodi, die durch eine Nutzereinrichtung bzw. UE (UE = user equipment) (120) mit mehreren Empfangsantennen (352a, 352b) unterstützt werden, wobei sich jeder RxD-Suchmodus von jedem verbleibenden RxD-Suchmodus in wenigstens einer Korrelation für die mehreren Empfangsantennen (352a, 352b) unterscheidet, Kombinieren der Korrelationsergebnisse für die mehreren Empfangsantennen und Berichten der Suchergebnisse für die mehreren Empfangsantennen; und

Durchführen (714) wenigstens eines Schrittes einer Suche gemäß dem ausgewählten RxD-Suchmodus; und wobei die mehreren RxD-Suchmodi einen RxD-Suchmodus beinhalten, indem Korrelation für alle Empfangsantennen mit einer komplexen Gewichtung durchgeführt wird, die auf jede Empfangsantenne angewandt wird, wobei Korrelationsergebnisse für die mehreren Empfangsantennen kombiniert werden und die Suchergebnisse zusammen für alle Empfangsantennen berichtet werden; und das weiter Folgendes aufweist:

Bestimmen der komplexen Gewichtung für jede Empfangsantenne (352a, 352b) zum Dämpfen von Signalen von interferierenden Zellen um eine Detektion eines Signals von einer anderen Zelle zu ermöglichen oder zu verbessern;

wobei das Bestimmen der mehreren komplexen Gewichtungen für die mehreren Empfangsantennen (352a, 352b) Folgendes aufweist:

Erlangen einer Korrelationsmatrix, wobei die Korrelationsmatrix Mittelwerte der Korrelation zwischen Eingangsabtastungen für die mehreren Empfangsantennen (352a, 352b) aufweist;

Zerlegen der Korrelationsmatrix zum Erlangen einer ersten Matrix von Eigenwerten und einer zweiten Matrix von Eigenvektoren;

Identifizieren eines Eigenvektors in der zweiten Matrix, der mit einem kleinsten Eigenwert in der ersten Matrix assoziiert ist; und

Verwenden der Komplex-Konjugierten der Elemente des identifizierten Eigen-Vektors als die mehreren komplexen Gewichtungen für die mehreren Empfangsantennen (352a, 352b).

2. Verfahren nach Anspruch 1, wobei die mehreren RxD-Suchmodi einen RxD-Suchmodus beinhalten, in dem eine Korrelation separat für jede Empfangsantenne (352a, 352b) durchgeführt wird, wobei Korrelationsergebnisse separat für jede Empfangsantenne kombiniert werden und Suchergebnisse separat für jede Empfangsantenne berichtet werden; und/oder wobei die mehreren RxD-Suchmodi einen RxD-Suchmodus beinhalten, bei dem Korrelation separat für jede Empfangsantenne (352a, 352b) durchgeführt wird, wobei Korrelationsergebnisse für die mehreren Empfangsantennen (352a, 352b) kombiniert werden und Suchergebnisse zusammen für alle Empfangsantennen berichtet werden.

3. Verfahren nach Anspruch 1, wobei die Suche einen Zellendetektionsschritt zum Detektieren wenigstens einer Zelle und zum Bestimmen von Schlitz-Timing für jede detektierte Zelle aufweist, und wobei das Durchführen wenigstens eines Schrittes der Suche Durchführen des Zellendetektionsschrittes gemäß dem ausgewählten RxD-Suchmodus aufweist; und wobei vorzugsweise

das Durchführen des Zellendetektionsschrittes gemäß dem ausgewählten RxD-Suchmodus Folgendes aufweist:

Codieren von Eingangsabtastungen für jede Empfangsantenne (352a, 352b) mit einem primären Synchronisationscode bzw. PSC (PSC = primary synchronization code) zum Erlangen eines Korrelationsergebnisses für die Empfangsantenne;
Kombinieren von Korrelationsergebnissen für die mehreren Empfangsantennen zum Erlangen eines kombinierten Korrelationsergebnisses; und
Bestimmen von Suchergebnissen basierend auf den kombinierten Korrelationsergebnissen.

4. Verfahren nach Anspruch 1, wobei die Suche einen Codedetektionsschritt zum Bestimmen eines Scrambling- bzw. Verwürfelungscodes aufweist, der durch eine detektierte Zelle verwendet wird, und wobei das Durchführen wenigstens eines Schrittes der Suche Durchführen des Codedetektionsschrittes gemäß dem ausgewählten RxD-Suchmodus aufweist; und wobei vorzugsweise

das Durchführen des Codedetektionsschrittes gemäß dem ausgewählten RxD-Suchmodus Folgendes aufweist:

Korrelieren von Eingangsabtastungen für jede Empfangsantenne (352a, 352b) mit jedem einer Vielzahl von möglichen Scrambling- bzw. Verwürfelungscodes zum Erlangen einer Vielzahl von Korrelationsergebnissen für die Vielzahl möglicher Scrambling-Codes für die Empfangsantenne;
Kombinieren von Korrelationsergebnissen für die mehreren Empfangsantennen (352a, 352b) für jeden Scrambling-Code zum Erlangen eines kombinierten Korrelationsergebnisses für den Scrambling-Code; und
Bestimmen von Suchergebnissen basierend auf einer Vielzahl von kombinierten Korrelationsergebnissen für die Vielzahl von Scrambling-Codes.

5. Verfahren nach Anspruch 4, wobei das Durchführen des Codedetektionsschrittes gemäß dem ausgewählten RxD-Suchmodus Folgendes aufweist:

Korrelieren von Eingangsabtastungen für jede Empfangsantenne (352a, 352b) für jede einer Vielzahl von Rahmentiminghypothesen zum Erlangen einer Vielzahl von Korrelationsergebnissen für die Vielzahl von Rahmentiminghypothesen für die Empfangsantenne;
Kombinieren von Korrelationsergebnissen für die mehreren Empfangsantennen (352a, 352b) für jede Rahmentiminghypothese zum Erlangen eines kombinierten Korrelationsergebnisses für die Rahmentiminghypothese; und
Bestimmen von Suchergebnissen basierend auf einer Vielzahl von kombinierten Korrelationsergebnissen für die Vielzahl von Rahmentiminghypothesen.

6. Verfahren nach Anspruch 8, wobei das Durchführen des Codedetektionsschrittes gemäß dem ausgewählten RxD-Suchmodus Folgendes aufweist:

Korrelieren von Eingangsabtastungen für jede Empfangsantenne (352a, 352b) mit jedem einer Vielzahl von möglichen Verwürfelungs- bzw. Scrambling-Codes zum Erlangen einer Vielzahl von Korrelationsergebnissen für die Vielzahl möglicher Scrambling-Codes für die Empfangsantenne (352a, 352b);
Kombinieren von Korrelationsergebnissen für die mehreren Empfangsantennen (352a, 352b) für jeden Scrambling-Code zum Erlangen eines kombinierten Korrelationsergebnisses für den Scrambling-Code;
Wiederholen des Korrelierens und des Kombinierens für jede einer Vielzahl von Rahmentiminghypothesen; und
Bestimmen von Suchergebnissen basierend auf einer Vielzahl von kombinierten Korrelationsergebnissen für die Vielzahl von Scrambling-Codes für jede der Vielzahl von Rahmentiminghypothesen.

7. Verfahren nach Anspruch 1, wobei die Suche einen Kanalschätzungsschritt zum Bestimmen eines Kanalprofils für jede Empfangsantenne (352a, 352b) für eine detektierte Zelle aufweist, und wobei das Durchführen wenigstens eines Schrittes der Suche Durchführen des Kanalschätzungsschrittes gemäß dem ausgewählten RxD-Suchmodus aufweist; und wobei vorzugsweise das Durchführen des Kanalschätzungsschrittes gemäß dem ausgewählten RxD-Suchmodus Folgendes aufweist:

Korrelieren von Eingangsabtastungen für jede Empfangsantenne mit einem Scrambling-Code für die detektierte Zelle bei einer Vielzahl von Zeitversätzen zum Erlangen einer Vielzahl von Korrelationsergebnissen für die Vielzahl von Zeitversätzen für die Empfangsantenne (352a, 352b);
Kombinieren von Korrelationsergebnissen, die in unterschiedlichen Zeitintervallen für jeden Zeitversatz und jede Empfangsantenne (352a, 352b) erlangt werden; und
Bestimmen von Suchergebnissen für jede Empfangsantenne (352a, 352b) basierend auf einer Vielzahl von kombinierten Korrelationsergebnissen für die Vielzahl von Zeitversätzen für die Empfangsantenne.

8. Verfahren nach Anspruch 1, das weiter Folgendes aufweist:

Auswählen eines zweiten Empfangsdiversitäts- bzw. RxD-Suchmodus aus den mehreren RxD-Suchmodi, die durch die UE unterstützt werden; und
Durchführen wenigstens eines anderen Schrittes der Suche gemäß dem ausgewählten zweiten RxD-Suchmodus.

9. Eine Vorrichtung zur Drahtloskommunikation, die Folgendes aufweist:

Mittel zum Auswählen eines Empfangsdiversitäts- bzw. RxD-Suchmodus (RxD = receive diversity) aus mehreren RxD-Suchmodi, die durch eine Nutzereinrichtung bzw. UE (UE = user equipment) (120) mit mehreren Empfangsantennen (352a, 352b) unterstützt werden, wobei sich jeder RxD-Suchmodus von jedem verbleibenden RxD-Suchmodus in wenigstens einer Korrelation für die mehreren Empfangsantennen (352a, 352b) unterscheidet, zum Kombinieren der Korrelationsergebnisse für die mehreren Empfangsantennen (352a, 352b) und zum Berichten der Suchergebnisse für die mehreren Empfangsantennen (352a, 352b); und
Mittel zum Durchführen wenigstens eines Schrittes einer Suche gemäß dem ausgewählten RxD-Suchmodus; und
wobei die mehreren RxD-Suchmodi einen RxD-Suchmodus beinhalten, indem Korrelation für alle Empfangsantennen (352a, 352b) mit einer komplexen Gewichtung durchgeführt wird, die auf jede Empfangsantenne (352a, 352b) angewandt wird, wobei Korrelationsergebnisse für die mehreren Empfangsantennen (352a, 352b) kombiniert werden und die Suchergebnisse zusammen für alle Empfangsantennen (352a, 352b) berichtet werden; und das weiter Folgendes aufweist:

Mittel zum Bestimmen (440) der komplexen Gewichtung für jede Empfangsantenne (352a, 352b) zum Dämpfen von Signalen von interferierenden Zellen um eine Detektion eines Signals von einer anderen Zelle zu ermöglichen oder zu verbessern;
wobei die Mittel zum Bestimmen der mehreren komplexen Gewichtungen für die mehreren Empfangsantennen (352a, 352b) Folgendes aufweisen:

Mittel zum Erlangen einer Korrelationsmatrix, wobei die Korrelationsmatrix Mittelwerte der Korrelation zwischen Eingangsabtastungen für die mehreren Empfangsantennen aufweist;
Mittel zum Zerlegen der Korrelationsmatrix zum Erlangen einer ersten Matrix von Eigenwerten und einer zweiten Matrix von Eigenvektoren;
Mittel zum Identifizieren eines Eigenvektors in der zweiten Matrix, der mit einem kleinsten Eigenwert in der ersten Matrix assoziiert ist; und
Mittel zum Verwenden der Komplex-Konjugierten der Elemente des identifizierten Eigenvektors als die mehreren komplexen Gewichtungen für die mehreren Empfangsantennen; und/oder

wobei die Mittel zum Durchführen der Suche Folgendes aufweisen:

Mittel zum Korrelieren von Eingangsabtastungen für jede Empfangsantenne mit einem Scrambling- bzw. Verwürfelungscode für eine detektierte Zelle zum Erlangen eines Korrelationsergebnisses für die Empfangsantenne;
Mittel zum Multiplizieren des Korrelationsergebnisses für jede Empfangsantenne (352a, 352b) mit einer komplexen Gewichtung für die Empfangsantenne (352a, 352b); und

Mittel zum Kombinieren von gewichteten Korrelationsergebnissen für die mehreren Empfangsantennen zum Erlangen eines kombinierten Korrelationsergebnisses.

**10.** Ein computerlesbares Speichermedium, das Code aufweist, der, wenn er durch einen Computer ausgeführt wird, den Computer veranlasst zum Durchführen von Operationen bzw. Vorgängen zur Drahtloskommunikation, wobei das computerlesbare Speichermedium Folgendes aufweist:

Code, um den Computer zu veranlassen, die Schritte nach einem der Ansprüche 1-8 auszuführen.

## Revendications

**1.** Procédé de communication sans fil, comprenant :

sélectionner (712) un mode de recherche de réception en diversité, RxD, parmi de multiples modes de recherche RxD pris en charge par un équipement d'utilisateur, UE (120), avec de multiples antennes de réception (352a, 352b), chaque mode de recherche RxD étant différent de chacun des modes de recherche RxD restants dans au moins l'une de corrélations pour les multiples antennes de réception (352a, 352b), combiner des résultats de corrélation pour les multiples antennes de réception, et rapporter les résultats de recherche pour les multiples antennes de réception ; et
réaliser (714) au moins une étape d'une recherche conformément au mode de recherche RxD sélectionné ; et dans lequel les multiples modes de recherche RxD comprennent un mode de recherche RxD dans lequel une corrélation est réalisée pour toutes les antennes de réception avec une pondération complexe appliquée à chaque antenne de réception, des résultats de corrélation pour les multiples antennes de réception sont combinés, et des résultats de recherche sont rapportés ensemble pour toutes les antennes de réception ; et comprenant en outre :

déterminer la pondération complexe pour chaque antenne de réception (352a, 352b) pour atténuer des signaux provenant de cellules en interférence pour permettre ou améliorer la détection d'un signal provenant d'une autre cellule ;

dans lequel la détermination des multiples pondérations complexes pour les multiples antennes de réception (352a, 352b) comprend :

obtenir une matrice de corrélation, la matrice de corrélation comprenant des moyennes de la corrélation entre des échantillons d'entrée pour les multiples antennes de réception (352a, 352b) ;
décomposer la matrice de corrélation pour obtenir une première matrice de valeurs propres et une deuxième matrice de vecteurs propres ;
identifier un vecteur propre dans la deuxième matrice associé à une valeur propre la plus faible dans la première matrice ; et
utiliser les conjugués complexes des éléments du vecteur propre identifié comme pondérations complexes multiples pour les multiples antennes de réception (352a, 352b).

**2.** Procédé selon la revendication 1, dans lequel les multiples modes de recherche RxD comprennent un mode de recherche RxD dans lequel une corrélation est réalisée séparément pour chaque antenne de réception (352a, 352b), des résultats de corrélation sont combinés séparément pour chaque antenne de réception, et des résultats de recherche sont rapportés séparément pour chaque antenne de réception ; et/ou
dans lequel les multiples modes de recherche RxD comprennent un mode de recherche RxD dans lequel une corrélation est réalisée séparément pour chaque antenne de réception (352a, 352b), des résultats de corrélation pour les multiples antennes de réception (352a, 352b) sont combinés, et des résultats de recherche sont rapportés ensemble pour toutes les antennes de réception.

**3.** Procédé selon la revendication 1, dans lequel la recherche comprend une étape de détection de cellules pour détecter au moins une cellule et pour déterminer des caractéristiques temporelles de créneaux de chaque cellule détectée, et dans lequel la réalisation d'au moins une étape de la recherche comprend la réalisation de l'étape de détection de cellules conformément au mode de recherche RxD sélectionné ; et de préférence
dans lequel la réalisation de l'étape de détection de cellules conformément au mode de recherche RxD sélectionné comprend :

corréler des échantillons d'entrée pour chaque antenne de réception (352a, 352b) avec un code de synchronisation primaire, PSC, pour obtenir un résultat de corrélation pour l'antenne de réception ;
combiner des résultats de corrélation pour les multiples antennes de réception pour obtenir un résultat de corrélation combiné ; et
déterminer des résultats de recherche sur la base du résultat de corrélation combiné.

4. Procédé selon la revendication 1, dans lequel la recherche comprend une étape de détection de code pour déterminer un code de brouillage utilisé par une cellule détectée, et dans lequel la réalisation d'au moins une étape de la recherche comprend la réalisation de l'étape de détection de code conformément au mode de recherche RxD sélectionné ; et de préférence
dans lequel la réalisation de l'étape de détection de code conformément au mode de recherche RxD sélectionné comprend

corréler des échantillons d'entrée pour chaque antenne de réception (352a, 352b) avec chacun d'une pluralité de code de brouillage possibles pour obtenir une pluralité de résultats de corrélation pour la pluralité de codes de brouillage possibles pour l'antenne de réception ;
combiner des résultats de corrélation pour les multiples antennes de réception (352a, 352b) pour chaque code de brouillage pour obtenir un résultat de corrélation combiné pour le code de brouillage ; et
déterminer des résultats de recherche sur la base d'une pluralité de résultats de corrélation combinés pour la pluralité de codes de brouillage.

5. Procédé selon la revendication 4, dans lequel la réalisation de l'étape de détection de code conformément au mode de recherche RxD sélectionné comprend :

corréler des échantillons d'entrée pour chaque antenne de réception (352a, 352b) pour chacune d'une pluralité d'hypothèses temporelles de trame pour obtenir une pluralité de résultats de corrélation pour la pluralité d'hypothèses temporelles de trame pour l'antenne de réception ;
combiner des résultats de corrélation pour les multiples antennes de réception (352a, 352b) pour chaque hypothèse temporelle de trame pour obtenir un résultat de corrélation combiné pour l'hypothèse temporelle de trame ; et
déterminer des résultats de recherche sur la base d'une pluralité de résultats de corrélation combinés pour la pluralité d'hypothèses temporelles de trame.

6. Procédé selon la revendication 8, dans lequel la réalisation de l'étape de détection de code conformément au mode de recherche RxD sélectionné comprend :

corréler des échantillons d'entrée pour chaque antenne de réception (352a, 352b) avec chacun d'une pluralité de codes de brouillage possibles pour obtenir une pluralité de résultats de corrélation pour la pluralité de code de brouillage possibles pour les antennes de réception (352a, 352b) ;
combiner des résultats de corrélation pour les multiples antennes de réception (352a, 352b) pour chaque code de brouillage pour obtenir un résultat de corrélation combiné pour le code de brouillage ;
répéter la corrélation et la combinaison pour chacune d'une pluralité d'hypothèses temporelles de trame ; et
déterminer des résultats de recherche sur la base d'une pluralité de résultats de corrélation combinés pour la pluralité de code de brouillage pour chacune de la pluralité d'hypothèses temporelles de trame.

7. Procédé selon la revendication 1, dans lequel la recherche comprend une étape d'estimation de canal pour déterminer un profil de canal pour chaque antenne de réception (352a, 352b) pour une cellule détectée, et dans lequel la réalisation d'au moins une étape de la recherche comprend la réalisation de l'étape d'estimation de canal conformément au mode de recherche RxD sélectionné ; et de préférence
dans lequel la réalisation de l'étape d'estimation de canal conformément au mode de recherche RxD sélectionné comprend :

corréler des échantillons d'entrée pour chaque antenne de réception avec un code de brouillage pour la cellule détectée à une pluralité de décalages temporels pour obtenir une pluralité de résultats de corrélation pour la pluralité de décalages temporels pour l'antenne de réception (352a, 352b) ;
combiner des résultats de corrélation obtenus dans des intervalles de temps différents pour chaque décalage temporel et chaque antenne de réception (352a, 352b) ; et
déterminer des résultats de recherche pour chaque antenne de réception (352a, 352b) sur la base d'une pluralité de résultats de corrélation combinés pour la pluralité de décalages temporels pour l'antenne de réception.

**8.** Procédé selon la revendication 1, comprenant en outre :

sélectionner un deuxième mode de recherche de réception en diversité, RxD, parmi les multiples modes de recherche RxD pris en charge par l'UE ; et
réaliser au moins une autre étape de la recherche conformément au deuxième mode de recherche RxD sélectionné.

**9.** Dispositif de communication sans fil, comprenant :

des moyens pour sélectionner un mode de recherche de réception en diversité, RxD, parmi de multiples modes de recherche RxD pris en charge par un équipement d'utilisateur, UE (120), avec de multiples antennes de réception (352a, 352b), chaque mode de recherche RxD étant différent de chacun des modes de recherche RxD restants dans au moins l'une de corrélations pour les multiples antennes de réception (352a, 352b), combiner des résultats de corrélation pour les multiples antennes de réception (352a, 352b), et rapporter les résultats de recherche pour les multiples antennes de réception (352a, 352b) ; et
des moyens pour réaliser au moins une étape d'une recherche conformément au mode de recherche RxD sélectionné ; et
dans lequel les multiples modes de recherche RxD comprennent un mode de recherche RxD dans lequel une corrélation est réalisée pour toutes les antennes de réception (352a, 352b) avec une pondération complexe appliquée à chaque antenne de réception (352a, 352b), des résultats de corrélation pour les multiples antennes de réception (352a, 352b) sont combinés, et des résultats de recherche sont rapportés ensemble pour toutes les antennes de réception (352a, 352b) ; et comprenant en outre

des moyens pour déterminer (440) la pondération complexe pour chaque antenne de réception (352a, 352b) pour atténuer des signaux provenant de cellules en interférence pour permettre ou améliorer la détection d'un signal provenant d'une autre cellule ;

les moyens pour déterminer les multiples pondérations complexes pour les multiples antennes de réception (352a, 352b) comprenant :

des moyens pour obtenir une matrice de corrélation, la matrice de corrélation comprenant des moyennes de la corrélation entre des échantillons d'entrée pour les multiples antennes de réception ;
des moyens pour décomposer la matrice de corrélation pour obtenir une première matrice de valeurs propres et une deuxième matrice de vecteurs propres ;
des moyens pour identifier un vecteur propre dans la deuxième matrice associé à une valeur propre la plus faible dans la première matrice ; et
des moyens pour utiliser les conjugués complexes des éléments du vecteur propre identifié comme pondérations complexes multiples pour les multiples antennes de réception ; et/ou

dans lequel les moyens pour réaliser la recherche comprennent :

des moyens pour corréler des échantillons d'entrée pour chaque antenne de réception avec un code de brouillage pour une cellule détectée pour obtenir un résultat de corrélation pour l'antenne de réception ;
des moyens pour multiplier le résultat de corrélation pour chaque antenne de réception (352a, 352b) par une pondération complexe pour l'antenne de réception (352a, 352b) ; et
des moyens pour combiner des résultats de corrélation pondérés pour les multiples antennes de réception pour obtenir un résultat de corrélation combiné.

**10.** Support de stockage lisible par un ordinateur comprenant du code qui, lorsqu'il est exécuté par un ordinateur, amène l'ordinateur à réaliser des opérations pour des communications sans fil, le support de stockage lisible par un ordinateur comprenant :

du code pour amener l'ordinateur à réaliser les étapes de l'une quelconque des revendications 1 à 8.

FIG. 1

One Radio Frame
38,400 chips

| ••• | Slot 0 | Slot 1 | ••• | Slot *s* | ••• | Slot 14 | ••• |

Time

*FIG. 2A*

One Radio Frame

Slot 0          Slot 1                    Slot 14

256 Chips        2560 Chips

**Primary SCH**    PSC    PSC    •••    PSC

**Secondary SCH**    $SSC_0^i$    $SSC_1^i$    $SSC_{14}^i$

••• **Primary CPICH** •••

Time

*FIG. 2B*

EP 2 436 124 B1

**FIG. 3**

*FIG. 4*

EP 2 436 124 B1

**FIG. 5**

EP 2 436 124 B1

FIG. 6

*700*

```
┌─────────────────────────────┐
│            Start            │
└─────────────────────────────┘
              │
              ▼            ╭712
┌─────────────────────────────┐
│     Select an RxD search mode│
│     from among multiple RxD  │
│     search modes supported by a│
│  UE with multiple receive antennas│
└─────────────────────────────┘
              │
              ▼            ╭714
┌─────────────────────────────┐
│     Perform at least one step of│
│     a search in accordance with │
│     the selected RxD search mode│
└─────────────────────────────┘
              │
              ▼
┌─────────────────────────────┐
│             End             │
└─────────────────────────────┘
```

**FIG. 7**

*800*

```
┌─────────────────────────────┐
│            Start            │
└─────────────────────────────┘
              │
              ▼            ╭812
┌─────────────────────────────┐
│     Perform a first step of a │
│     search in accordance with a│
│     first RxD search mode at a UE│
│     with multiple receive antennas│
└─────────────────────────────┘
              │
              ▼            ╭814
┌─────────────────────────────┐
│     Perform a second step of   │
│     the search in accordance with a│
│     second RxD search mode at the UE│
└─────────────────────────────┘
              │
              ▼
┌─────────────────────────────┐
│             End             │
└─────────────────────────────┘
```

**FIG. 8**

*900*

```
┌─────────────────────────────┐
│            Start            │
└─────────────────────────────┘
              │
              ▼            ╭912
┌─────────────────────────────┐
│  Determine multiple complex weights│
│  for multiple receive antennas at a UE│
│  to attenuate signals from interfering│
│             cells           │
└─────────────────────────────┘
              │
              ▼            ╭914
┌─────────────────────────────┐
│       Perform a search to detect│
│     at least one cell with the multiple│
│     complex weights applied to the│
│     multiple receive antennas to │
│     attenuate the signals from interfering│
│             cells           │
└─────────────────────────────┘
              │
              ▼
┌─────────────────────────────┐
│             End             │
└─────────────────────────────┘
```

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 61182544 A
- US 2003108135 A1

- EP 1069713 A1

**Non-patent literature cited in the description**

- **JEAN-FRANOIS FRIGON et al.** Design and Implementation of a Baseband WCDMA Dual-Antenna Mobile Terminal. *IEEE TRANSACTIONS ON CIRCUITS AND SYSTEMS PART I: REGULAR PAPERS,* 01 March 2007, vol. 54 (3